# EUROPEAN PATENT APPLICATION

(11) **EP 4 834 993 A1**
(43) Date of publication of application: **04.11.2026**
(21) Application number: 24912745.7
(22) Date of filing: 23.12.2024
(51) Int. Cl.: C08L 27/12, C08F 214/18, C08K 5/17

(54) **FLUORINE-CONTAINING COPOLYMER COMPOSITION AND CROSSLINKED RUBBER ARTICLE**

(30) Priority: 27.12.2023 JP 2023221261
(71) Applicant: AGC Inc., Chiyoda-ku Tokyo 100-8405 (JP)
(72) Inventor: TAMURA, Tasuku, Tokyo 100-8405 (JP); KAWAI, Tsuyoshi, Tokyo 100-8405 (JP)
(74) Representative: Müller-Boré & Partner Patentanwälte PartG mbB
(86) International application number: PCT/JP2024/045514
(87) International publication number: WO 2025/142858

(57) **Abstract**

Provided are a fluorine-containing copolymer composition capable of forming a crosslinked rubber article that exhibits reduced weight loss after a lapse of predetermined time during long-term use under plasma irradiation conditions, and a crosslinked rubber article with reduced weight loss. The fluorine-containing copolymer composition contains: a fluorine-containing copolymer (A) including units based on tetrafluoroethylene and units based on perfluoro(alkyl vinyl ether); a fluorine-containing copolymer (B), different from the fluorine-containing copolymer (A), including units based on a monomer having at least one functional group selected from the group consisting of a carboxy group and a group represented by the formula (X), units based on tetrafluoroethylene and units based on perfluoro(alkyl vinyl ether), and having a particle size D90 of 4.0 µm or smaller; and a crosslinking agent.

## Description

### TECHNICAL FIELD

The present invention relates to a fluorine-containing copolymer composition and a crosslinked rubber article.

### BACKGROUND ART

Crosslinked rubber articles obtained by crosslinking fluorine-containing copolymers are excellent in heat resistance, chemical resistance, oil resistance, weather resistance and the like, and thus are widely used as sealing materials (for example, O-rings, packings, oil seals and gaskets) and cushioning materials in the fields of vehicles, ships, aircraft, general machinery, architecture and the like.

As a composition for forming such crosslinked rubber articles, Patent Document 1 discloses a composition containing a specific fluorine-containing copolymer.

### PRIOR ART DOCUMENTS

### PATENT DOCUMENTS

Patent Document 1: WO2021/210502

### DISCLOSURE OF INVENTION

### TECHNICAL PROBLEM

Recent years have seen a demand for improved performance of crosslinked rubber articles in various fields. More specifically, there has been a demand for a fluorine-containing copolymer composition capable of forming crosslinked rubber articles that exhibit reduced weight loss after a lapse of predetermined time during long-term use under plasma irradiation conditions.

In response to such a demand, the present inventors have assessed crosslinked rubber articles formed from the fluorine-containing copolymer composition disclosed in Patent Document 1, and have found that the weight loss of these crosslinked rubber articles is difficult to reduce.

It is accordingly an object of the present invention to provide a fluorine-containing copolymer composition capable of forming crosslinked rubber articles that exhibit reduced weight loss after a lapse of predetermined time during long-term use under plasma irradiation conditions, and to provide such a crosslinked rubber article.

### SOLUTION TO PROBLEM

As a result of intensive studies, the present inventors have found the following solutions to the above-described problem.
[1] A fluorine-containing copolymer composition comprising:
   a fluorine-containing copolymer (A) comprising units based on tetrafluoroethylene and units based on perfluoro(alkyl vinyl ether);
   a fluorine-containing copolymer (B), which is a fluorine-containing copolymer different from the fluorine-containing copolymer (A), comprising units based on a monomer having at least one functional group selected from the group consisting of a carboxy group and a group represented by the formula (X), units based on tetrafluoroethylene and units based on perfluoro(alkyl vinyl ether), and having a particle size D90 of 4.0 µm or smaller

      *-CO-O-CO-* (X)

      where * represents a bonding position; and
   a crosslinking agent.
[2] The fluorine-containing copolymer composition according to [1],
   wherein the fluorine-containing copolymer (A) further comprises units having nitrile groups,
   wherein the content of the units having nitrile groups to all units in the fluorine-containing copolymer (A) is 0.05 to 5.0 mol%,
   wherein the content of the units based on tetrafluoroethylene to all units in the fluorine-containing copolymer (A) is 59.0 to 79.95 mol%, and
   wherein the content of the units based on perfluoro(alkyl vinyl ether) to all units in the fluorine-containing copolymer (A) is 20.0 to 40.95 mol%.
[3] The fluorine-containing copolymer composition according to [1] or [2],
   wherein the content of the units based on the monomer having at least one functional group selected from the group consisting of a carboxy group and a group represented by the formula (X) to all units in the fluorine-containing copolymer (B) is 0.01 to 3.0 mol%,
   wherein the content of the units based on tetrafluoroethylene to all units in the fluorine-containing copolymer (B) is 90 to 99.89 mol%, and
   wherein the content of the units based on perfluoro(alkyl vinyl ether) to all units in the fluorine-containing copolymer (B) is 0.1 to 9.99 mol%.
[4] The fluorine-containing copolymer composition according to any one of [1] to [3], wherein the content of the fluorine-containing copolymer (B) is 50 parts by mass or less per 100 parts by mass of the fluorine-containing copolymer (A).
[5] The fluorine-containing copolymer composition according to any one of [1] to [4],
   wherein the crosslinking agent is a compound having two or more amino groups, and
   wherein the content of the crosslinking agent is 0.3 to 10 parts by mass per 100 parts by mass of the fluorine-containing copolymer (A).
[6] The fluorine-containing copolymer composition according to any one of [1] to [5], wherein the fluorine-containing copolymer (B) has a bulk density of 0.25 g/mL or lower.
[7] A fluorine-containing copolymer composition comprising:
   a fluorine-containing copolymer (A) comprising units based on tetrafluoroethylene and units based on perfluoro(alkyl vinyl ether);
   a fluorine-containing copolymer (B), which is a fluorine-containing copolymer different from the fluorine-containing copolymer (A), comprising units based on a monomer having at least one functional group selected from the group consisting of a carboxy group and a group represented by the formula (X), units based on tetrafluoroethylene and units based on perfluoro(alkyl vinyl ether)

      *-CO-O-CO-* (X)

      where * represents a bonding position; and
   a crosslinking agent,
   wherein the fluorine-containing copolymer composition has a T₉₀ value of 10 minutes or less in a vulcanization test at 180°C according to JIS K6296.
[8] The fluorine-containing copolymer composition according to [7],
   wherein the fluorine-containing copolymer (A) further comprises units having nitrile groups,
   wherein the content of the units having nitrile groups to all units in the fluorine-containing copolymer (A) is 0.05 to 5.0 mol%,
   wherein the content of the units based on tetrafluoroethylene to all units in the fluorine-containing copolymer (A) is 59.0 to 79.95 mol%, and
   wherein the content of the units based on perfluoro(alkyl vinyl ether) to all units in the fluorine-containing copolymer (A) is 20.0 to 40.95 mol%.
[9] The fluorine-containing copolymer composition according to [7] or [8],
   wherein the content of the units based on the monomer having at least one functional group selected from the group consisting of a carboxy group and a group represented by the formula (X) to all units in the fluorine-containing copolymer (B) is 0.01 to 3.0 mol%,
   wherein the content of the units based on tetrafluoroethylene to all units in the fluorine-containing copolymer (B) is 90 to 99.89 mol%, and
   wherein the content of the units based on perfluoro(alkyl vinyl ether) to all units in the fluorine-containing copolymer (B) is 0.1 to 9.99 mol%.
[10] The fluorine-containing copolymer composition according to any one of [7] to [9], wherein the content of the fluorine-containing copolymer (B) is 50 parts by mass or less per 100 parts by mass of the fluorine-containing copolymer (A).
[11] The fluorine-containing copolymer composition according to any one of [7] to [10],
   wherein the crosslinking agent is a compound having two or more amino groups, and
   wherein the content of the crosslinking agent is 0.3 to 10 parts by mass per 100 parts by mass of the fluorine-containing copolymer (A).
[12] The fluorine-containing copolymer composition according to any one of [7] to [11], wherein the fluorine-containing copolymer (B) has a bulk density of 0.25 g/mL or lower.
[13] A crosslinked rubber article obtained from the fluorine-containing copolymer composition according to any one of [1] to [12].

### ADVANTAGEOUS EFFECTS OF INVENTION

According to the present invention, it is possible to provide a fluorine-containing copolymer composition capable of forming crosslinked rubber articles that exhibit reduced weight loss after a lapse of predetermined time during long-term use under plasma irradiation conditions, and to provide such a crosslinked rubber article.

### DESCRIPTION OF EMBODIMENTS

The terms used in the present invention have the following meanings.

A numerical range expressed using "to" means a range including numerical values before and after "to" as the lower and upper limits.

A "unit" is a generic term for an atomic group derived from one molecule of monomer, which is formed directly by polymerization of the monomer, and an atomic group obtained by chemical conversion of a part of the aforementioned atomic group. A "unit based on a monomer" is hereinafter also simply referred to as a "unit".

A "rubber" refers to a rubber material having the properties as defined in JIS K6200: 2008, and is distinguished from a "resin".

### [Fluorine-Containing Copolymer Composition (First Embodiment)]

A fluorine-containing copolymer composition of the first embodiment of the present invention (hereinafter also referred to as the "present composition 1") contains:
a fluorine-containing copolymer (A) including units based on tetrafluoroethylene and units based on perfluoro(alkyl vinyl ether);
a fluorine-containing copolymer (B), different from the fluorine-containing copolymer (A), including units based on a monomer having at least one functional group selected from the group consisting of a carboxy group and a group represented by the formula (X), units based on tetrafluoroethylene and units based on perfluoro(alkyl vinyl ether), and having a particle size D90 of 4.0 µm or smaller; and
a crosslinking agent.

A crosslinked rubber article formed from the present composition 1 exhibits, during long-term use under plasma irradiation conditions, reduced weight loss after a lapse of predetermined time (hereinafter also referred to as the "effects of the present invention"). The reason for these effects is not clear, but is presumed as follows.

A characteristic feature of the present composition 1 is that the particle size D90 of the fluorine-containing copolymer (B) is 4.0 µm or smaller. When the fluorine-containing copolymer (B) has such a controlled particle size D90, it can be uniformly dispersed within the resulting crosslinked rubber article, thereby achieving the desired effects of the present invention. Although other particle sizes such as a particle size D10 and a particle size D50 (median diameter) may also be considered, it has been found that the particle size D90 has a particularly significant influence on the effects of the present invention.

The effects of the present invention can, for example, be evaluated based on the weight loss rate (mass%/time (h)).

The weight loss rate (mass%/time (h)) can be measured, for example, by the method described in the Examples below. The weight loss rate (mass%/time (h), period A) of the crosslinked rubber article from the start of plasma processing to 1.5 hours afterwards is preferably 2.150 or less, more preferably 2.125 or less. The weight loss rate (mass%/time (h), period B) of the crosslinked rubber article from 1.5 hours to 3.0 hours after the start of plasma processing is preferably 2.150 or less, more preferably 2.120 or less. The weight loss rate (mass%/time (h), period C) of the crosslinked rubber article from 3.0 hours to 6.0 hours after the start of plasma processing is preferably 2.040 or less, more preferably 2.038 or less. When the weight loss rate (mass%/time (h)) falls within the above range, a device with a crosslinked rubber article of the present invention can suppress the occurrence of malfunctions during operation. Furthermore, during the production of a semiconductor product or the like using a device with a crosslinked rubber article of the present invention, the occurrence of particle-induced defects can be suppressed. It is particularly preferable that the weight loss rate during the period C falls within the above range.

### <Fluorine-Containing Copolymer (A)>

The present composition 1 contains a fluorine-containing copolymer (A).

The fluorine-containing copolymer (A) includes units based on tetrafluoroethylene (hereinafter also referred to as "TFE") and units based on perfluoro(alkyl vinyl ether) (hereinafter also referred to as "PAVE").

The fluorine-containing copolymer (A) itself does not fully return to its original shape when stretched, but upon crosslinking, exhibits the ability to readily return to its original shape, that is, exhibits rubber properties.

The content of the TFE units to all units in the fluorine-containing copolymer (A) is preferably 60.0 to 80.0 mol%, more preferably 59.0 to 79.95 mol%, still more preferably 64.0 to 72.0 mol%.

The PAVE units are units based on perfluoro(alkyl vinyl ether).

From the viewpoint of high polymerization reactivity and good rubber properties, PAVE is preferably a monomer represented by the formula (1).

CF₂=CF-O-R^{f2} (1)

In the formula (1), R^{f2} represents a C₁₋₁₀ perfluoroalkyl group.

The number of carbon atoms in R^{f2} is preferably 1 to 8, more preferably 1 to 6, still more preferably 1 to 5, particularly preferably 1 to 3, from the viewpoint of higher polymerization reactivity.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). Of these, it is preferred to use PMVE or PPVE.

From the viewpoint of higher elasticity of the resulting crosslinked rubber article, the content of the PAVE units to all units in the fluorine-containing copolymer (A) is preferably 20.0 to 40.95 mol%, more preferably 20.0 to 37.0 mol%, still more preferably 27.0 to 33.0 mol%. In the case where PMVE or PPVE is used as PAVE, the preferable content is the same as above.

The fluorine-containing copolymer (A) preferably includes units based on a monomer (hereinafter also referred to as "R_{CN}") having a nitrile group in addition to the units based on the TFE monomer and the units based on the PAVE monomer.

With a view to achieving the superior effects of the present invention, R_{CN} preferably further has a fluorine atom, and is more preferably a monomer represented by the formula (2).

CR¹¹R¹²=CR¹³-R¹⁴-CN (2)

In the formula (2), R¹¹, R¹² and R¹³ each independently represent a hydrogen atom, a fluorine atom or a methyl group; and R¹⁴ represents a divalent C₁₋₁₀ perfluorohydrocarbon group which may have an etheric oxygen atom at a terminal end or between carbon atoms thereof.

From the viewpoint of high polymerization reactivity of R_{CN}, R¹¹, R¹² and R¹³ are each preferably a fluorine atom or a hydrogen atom, and more preferably, all of R¹¹, R¹² and R¹³ are fluorine atoms or hydrogen atoms. All of R¹¹, R¹² and R¹³ are still more preferably fluorine atoms from the viewpoint of higher releasability and heat resistance of the resulting crosslinked rubber article.

R¹⁴ may be linear, branched or cyclic, and is preferably linear or branched. The number of carbon atoms in R¹⁴ is preferably 2 to 8, more preferably 3 to 7, still more preferably 4 to 7, particularly preferably 4 to 6.

R¹⁴ may have an etheric oxygen atom, and preferably has an etheric oxygen atom from the viewpoint of better rubber properties of the resulting crosslinked rubber article.

The number of etheric oxygen atoms in R¹⁴ is preferably 1 to 3, more preferably 1 or 2.

Specific examples of the monomer represented by the formula (2) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN. From the viewpoint of higher releasability and heat resistance of the resulting crosslinked rubber article, it is preferred to use 8CNVE or MV5CN.

With a view to achieving the superior effects of the present invention, the content of the R_{CN} units to all units in the fluorine-containing copolymer (A) is preferably 0.05 to 5.0 mol%, more preferably 0.1 to 3.0 mol%, still more preferably 0.2 to 1.5 mol%.

The fluorine-containing copolymer (A) may include units based on a monomer (hereinafter also referred to as an "additional monomer") other than the above monomers.

Specific examples of the additional monomer include vinylidene fluoride (hereinafter also referred to as "VdF"), hexafluoropropylene (hereinafter also referred to as "HFP"), chlorotrifluoroethylene, a monomer (hereinafter also referred to as "BO") having two or more polymerizable unsaturated bonds, a monomer represented by the formula (6), ethylene, propylene and a monomer having a halogen atom (hereinafter also referred to as "other halogen-containing monomer").

As specific examples of the other halogen-containing monomer, bromotrifluoroethylene and iodotrifluoroethylene may be mentioned.

BO units are units based on a monomer having two or more polymerizable unsaturated bonds.

As specific examples of the polymerizable unsaturated bonds, carbon-carbon double bond (C=C) and carbon-carbon triple bond (C≡C) may be mentioned.

From the viewpoint of higher polymerization reactivity, the number of polymerizable unsaturated bonds in BO is preferably 2 to 6, more preferably 2 or 3, still more preferably 2.

BO preferably further has a fluorine atom from the viewpoint of lower compression set of the resulting crosslinked rubber article under high-temperature conditions.

BO is preferably a monomer represented by the formula (3).

(CR³¹R³²=CR³³)ₐ₃R³⁴ (3)

In the formula (3), R³¹, R³² and R³³ each independently represent a hydrogen atom, a fluorine atom, a methyl group or a trifluoromethyl group; a3 represents an integer of 2 to 6; and R³⁴ represents a (a3)-valent C₁₋₁₀ perfluorohydrocarbon group which may have an etheric oxygen atom at a terminal end or between carbon atoms thereof. The plurality of R³¹, the plurality of R³² and the plurality of R³³ may be the same as or different from one another, and are preferably the same as one another.

a3 is preferably 2 or 3, more preferably 2.

From the viewpoint of higher polymerization reactivity of BO, R³¹, R³² and R³³ are each preferably a fluorine atom or a hydrogen atom, and more preferably, all of R³¹, R³² and R³³ are fluorine atoms or hydrogen atoms. Still more preferably, all of R³¹, R³² and R³³ are fluorine atoms from the viewpoint of heat resistance and chemical resistance of the resulting crosslinked rubber article.

R³⁴ may be linear, branched or cyclic, and is preferably linear or branched, more preferably linear. The number of carbon atoms in R³⁴ is preferably 2 to 10, more preferably 3 to 8, still more preferably 3 to 6, particularly preferably 3 to 5.

R³⁴ may have an etheric oxygen atom, and preferably has an etheric oxygen atom from the viewpoint of better rubber properties of the resulting crosslinked rubber article.

The number of etheric oxygen atoms in R³⁴ is preferably 1 to 6, more preferably 1 to 3, still more preferably 1 or 2. The etheric oxygen atom is preferably located at a terminal of R³⁴.

As preferred examples of the monomer represented by the formula (3), a monomer represented by the formula (4) and a monomer represented by the formula (5) may be mentioned.

(CF₂=CF)₂R⁴¹ (4)

In the formula (4), R⁴¹ represents a divalent C₂₋₁₀ perfluorohydrocarbon group which may have an etheric oxygen atom at a terminal end or between carbon atoms thereof.

Specific examples of the monomer represented by the formula (4) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂ and CF₂=CFOCF₂CF₂O(CF₂O)₂CF₂CF₂OCF=CF₂. Of these, it is preferred to use CF₂=CFO(CF₂)₃OCF=CF₂ or CF₂=CFO(CF₂)₄OCF=CF₂.

(CH₂=CH)₂R⁵¹ (5)

In the formula (5), R⁵¹ represents a divalent C₂₋₁₀ perfluorohydrocarbon group which may have an etheric oxygen atom at a terminal end or between carbon atoms thereof.

Specific examples of the monomer represented by the formula (5) include CH₂=CH(CF₂)₂CH=CH₂, CH₂=CH(CF₂)₄CH=CH₂ and CH₂=CH(CF₂)₆CH=CH₂. Among these, CH₂=CH(CF₂)₆CH=CH₂ is preferred.

By copolymerizing BO, the terminal polymerizable double bonds of BO react during the polymerization to form the fluorine-containing copolymer (A) with a branched chain.

CF₂=CF-O-R^{f6} (6)

In the formula (6), R^{f6} represents a C₁₋₈ perfluoroalkyl group having one to five etheric oxygen atoms. The number of carbon atoms in R^{f6} is preferably 1 to 6, more preferably 1 to 5.

Specific examples of the monomer represented by the formula (6) include perfluoro(3,6-dioxa-1-heptene), perfluoro(3,6-dioxa-1-octene) and perfluoro(5-methyl-3,6-dioxa-1-nonene).

In the case where the fluorine-containing copolymer (A) includes units based on the additional monomer, the content of the units based on the additional monomer to all units in the fluorine-containing copolymer (A) is preferably 0.01 to 20 mol%, more preferably 0.5 to 10 mol%, still more preferably 1 to 5 mol%, from the viewpoint of good rubber properties of the resulting crosslinked rubber article.

With a view to achieving the superior effects of the present invention, the fluorine-containing copolymer (A) is preferably a perfluorinated copolymer.

The "perfluorinated copolymer" refers to a fluorine-containing copolymer having a chain of carbon atoms as a main chain, with substantially no hydrogen atoms bonded to carbon atoms and fluorine atoms substituted for hydrogen atoms. The perfluorinated copolymer may have a polyvalent atom other than carbon on its side chain. As such polyvalent atoms, oxygen atoms are preferred.

Here, the expression "substantially no hydrogen atoms" means that the content of hydrogen atoms in the perfluorinated copolymer is 0.5 mass% or less. The content of hydrogen atoms in the perfluorinated copolymer is preferably 0.1 mass% or less, more preferably 0.07 mass% or less, still more preferably 0.05 mass% or less. When the hydrogen content falls within the above range, high heat resistance and chemical resistance can be easily achieved.

The fluorine-containing copolymer (A) may have iodine atoms. In this case, the iodine atoms are preferably present at terminals of polymer chains of the fluorine-containing copolymer (A).

The iodine atoms may be derived from an iodine compound that serves as a chain transfer agent described later, or may be derived from an iodine-containing monomer such as iodotrifluoroethylene among the above-described other halogen-containing monomers. The iodine atoms are preferably derived from an iodine compound that serves as a chain transfer agent.

In the case where the fluorine-containing copolymer (A) has iodine atoms, the content of the iodine atoms is preferably 0.01 to 5.0 mass%, more preferably 0.05 to 2.0 mass%, still more preferably 0.05 to 1.0 mass%, based on the total mass of the fluorine-containing copolymer (A). When the iodine content falls within the above range, the fluorine-containing copolymer (A) shows improved crosslinking reactivity, leading to excellent mechanical properties of the resulting crosslinked rubber article.

The content of the fluorine-containing copolymer (A) is preferably 55 to 95 mass%, more preferably 65 to 90 mass%, still more preferably 75 to 85 mass%, based on the total mass of the present composition 1.

An example of a method for producing the fluorine-containing copolymer (A), a method may be mentioned in which the above-described monomers are copolymerized in the presence of a radical polymerization initiator.

The radical polymerization initiator is preferably a water-soluble polymerization initiator or a redox polymerization initiator.

Specific examples of the water-soluble polymerization initiator include: persulfates such as ammonium persulfate, sodium persulfate and potassium persulfate; and organic polymerization initiators such as disuccinic peroxide and azobisisobutylamidine dihydrochloride. Among these, persulfates are preferred, and ammonium persulfate is more preferred.

The redox polymerization initiator may be a polymerization initiator that combines a persulfate with a reducing agent, and is preferably of the type capable of polymerizing each monomer at a polymerization temperature ranging from 0 to 85°C. Specific examples of the persulfate constituting the redox polymerization initiator include ammonium persulfate, alkali metal persulfates such as sodium persulfate and potassium persulfate. Among these, ammonium persulfate is preferred. Specific examples of the reducing agent to be combined with the persulfate include thiosulfates, sulfites, bisulfites, pyrosulfites and hydroxymethanesulfinate salts. Among these, hydroxymethanesulfinates are preferred, and sodium hydroxymethanesulfinate is more preferred.

In the method for producing the fluorine-containing copolymer (A), the above-described monomers may be copolymerized in the presence of a chain transfer agent along with the radical polymerization initiator.

The chain transfer agent is preferably an iodine compound, more preferably an iodine compound represented by the formula RI² where R represents an alkylene or perfluoroalkylene group having at least three (preferably 3 to 8) carbon atoms.

Specific examples of the iodine compound represented by the formula RI₂ include 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane.

As the iodine compound, an iodine compound having a perfluoroalkylene group is preferred, and 1,4-diiodoperfluorobutane is more preferred.

When the above-described monomers are copolymerized in the presence of such an iodine compound, iodine atoms can be introduced into the fluorine-containing copolymer (A).

For details of components other than the above-described components used in the production of the fluorine-containing copolymer (A) and for details of the production method of the fluorine-containing copolymer (A), reference may be made to paragraphs [0019] to [0034] of WO 2010/082633.

### <Fluorine-Containing Copolymer (B)>

The present composition 1 contains a fluorine-containing copolymer (B).

The fluorine-containing copolymer (B) is a fluorine-containing copolymer different from the fluorine-containing copolymer (A), and includes units based on a monomer having at least one functional group (hereinafter also referred to as a "specific functional group") selected from the group consisting of a carboxy group and a group represented by the formula (X), TFE units and PAVE units.

In other words, the fluorine-containing copolymer (B) includes units having specific functional groups, TFE units and PAVE units.

The specific functional group is either one or both of a carboxy group and a group represented by the formula (X).

*-CO-O-CO-* (X)

In the formula (X), * represents a bonding position.

The units having specific functional groups are preferably units based on a monomer (hereinafter also referred to as "Rx") having such a specific functional group.

Rx may have a plurality of specific functional groups. In the case where Rx has a plurality of specific functional groups, the plurality of specific functional groups may be the same as or different from one another.

Rx, which is used as a monomer, has a polymerizable unsaturated bond. Specific examples of the polymerizable unsaturated bond are as described above.

Rx is preferably a compound having one specific functional group and one polymerizable unsaturated bond.

Examples of the monomer having a carboxy group include anhydrides of unsaturated dicarboxylic acids, such as itaconic anhydride (hereinafter also referred to as "IAH"), citraconic anhydride (hereinafter also referred to as "CAH"), 5-norbornene-2,3-dicarboxylic anhydride (also known as Nadic anhydride; hereinafter also referred to as "NAH") and maleic anhydride.

As a group represented by the formula (X), a group formed by removing one hydrogen atom from an acid anhydride may preferably be mentioned.

Examples of the monomer having a group represented by the formula (X) include anhydrides of unsaturated dicarboxylic acids, such as itaconic anhydride (hereinafter also referred to as "IAH"), citraconic anhydride (hereinafter also referred to as "CAH"), 5-norbornene-2,3-dicarboxylic anhydride (also known as Nadic anhydride; hereinafter also referred to as "NAH") and maleic anhydride.

In view of the reactivity with nitrile groups that the fluorine-containing copolymer (A) may have, Rx preferably includes a monomer having a group represented by the formula (X). For ease of production of the fluorine-containing copolymer (B), Rx more preferably includes at least one type selected from the group consisting of IAH, CAH and NAH, still more preferably includes NAH, and particularly preferably is NAH.

One type of Rx may be used alone, or two or more types of Rx may be used in combination.

Examples of the TFE units and PAVE units in the fluorine-containing copolymer (B) are the same as those of the TFE units and PAVE units in the fluorine-containing copolymer (A).

The fluorine-containing copolymer (B) may include units based on a monomer (hereinafter also referred to as an "additional monomer") other than the above monomers. Specific examples and preferred embodiments of the additional monomer are the same as those of the additional monomer in the fluorine-containing copolymer (A).

The fluorine-containing copolymer (B) may have specific functional groups as main chain terminals.

The specific functional groups as the main chain terminals can be introduced by a radical polymerization initiator, a chain transfer agent or the like used in the production of the fluorine-containing copolymer (B).

The fluorine-containing copolymer (B) is in particulate form. In other words, the fluorine-containing copolymer (B) is in the form of particles of the fluorine-containing copolymer (B).

The particle size D90 of the fluorine-containing copolymer (B) is 4.0 µm or smaller, and is preferably 3.5 µm or smaller, more preferably 3.0 µm or smaller. The lower limit of the particle size is preferably 1.0 µm or greater, more preferably 2.0 µm or greater.

The particle size D90 of the fluorine-containing copolymer (B) refers to a volume-based cumulative 90% size (D90) determined by the laser diffraction and scattering method. That is, a particle size distribution is measured by the laser diffraction and scattering method to obtain a cumulative curve with the total volume of a collection of particles set as 100%, and the particle size at which the cumulative volume reaches 90% on the cumulative curve is defined as D90.

As examples of a method for controlling the particle size D90 of the fluorine-containing copolymer (B), grinding and classification may be mentioned.

The fluorine-containing copolymer (B) preferably has a bulk density of 0.50 g/mL or lower, more preferably 0.30 g/mL or lower, still more preferably 0.25 g/mL or lower. The lower limit of the bulk density is preferably 0.01 g/mL or higher, more preferably 0.10 g/mL or higher.

As a method for measuring the bulk density, for example, the method described in the Examples below may be used.

With a view to achieving the superior effects of the present invention, the content of the units having specific functional groups to all units in the fluorine-containing copolymer (B) is preferably 0.01 to 3 mol%, more preferably 0.03 to 2 mol%, still more preferably 0.05 to 1 mol%. Even in the case where the units having specific functional groups are based on NAH, the preferable content range is the same as above.

The contents of the TFE units to all units in the fluorine-containing copolymer (B) is preferably 90 to 99.89 mol%, more preferably 95 to 99.47 mol%, still more preferably 96 to 98.95 mol%, with a view to achieving the superior effects of the present invention.

The content of the PAVE units to all units in the fluorine-containing copolymer (B) is preferably 0.1 to 9.99 mol%, more preferably 0.5 to 4.97 mol%, still more preferably 1 to 3.95 mol%, with a view to achieving the superior effects of the present invention. Even in the case where PPVE units are used as the PAVE units, the preferable content range is the same as above.

With a view to achieving the superior effects of the present invention, the content of the fluorine-containing copolymer (B) is preferably 50 parts by mass or less, more preferably 30 parts by mass or less, still more preferably 20 parts by mass or less, per 100 parts by mass of the fluorine-containing copolymer (A).

The content of the fluorine-containing copolymer (B) is preferably 2 parts by mass or more, more preferably 5 parts by mass or more, still more preferably 7 parts by mass or more, per 100 parts by mass of the fluorine-containing copolymer (A).

Furthermore, the content of the fluorine-containing copolymer (B) is preferably 1 to 40 mass%, more preferably 1 to 30 mass%, still more preferably 1 to 20 mass%, based on the total mass of the present composition 1.

An example of a method for producing the fluorine-containing copolymer (B), a method may be mentioned in which the above-described monomers are copolymerized in the presence of a radical polymerization initiator. The details of this production method are as described in WO2016/017801.

### <Crosslinking Agent>

The present composition 1 contains a crosslinking agent.

As specific examples of the crosslinking agent, an organic peroxide and a compound having two or more amino groups (hereinafter also referred to as a "polyamine compound") may be mentioned. A polyamine compound is preferred from the viewpoint of excellent crosslinkability of the fluorine-containing copolymer (A) and lower compression set of the resulting crosslinked rubber article under high-temperature and high-compression conditions.

The polyamine compound may be a compound obtained by substituting hydrogen atoms of aliphatic hydrocarbon with amino groups, or may be a compound obtained by substituting hydrogen atoms of aromatic hydrocarbon with amino groups. With a view to achieving the superior effects of the present invention, preferred is a compound obtained by substituting hydrogen atoms of aromatic hydrocarbon with amino groups.

The polyamine compound preferably has a fluorine atom. In this case, the polyamide compound shows good compatibility with the fluorine-containing copolymer (A), thereby providing the crosslinked rubber article with a lower compression set under high-temperature and high-compression conditions.

Specific examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP"; also known as bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic acid dihydrazide, and compounds represented by the formula (XII) of Japanese Patent No. 5833657. Among these, BOAP is preferred with a view to achieving the superior effects of the present invention.

The content of the crosslinking agent is preferably 0.3 to 10 parts by mass, more preferably 0.3 to 5 parts by mass, still more preferably 0.5 to 3 parts by mass, per 100 parts by mass of the fluorine-containing copolymer (A).

### <Additional Components>

The present composition 1 may contain additional components other than the above-described components, within the range that does not impair the effects of the present invention.

Specific examples of the additional components include: an acid acceptor (for example, a fatty acid ester, a fatty acid metal salt, or a divalent metal oxide (such as magnesium oxide, calcium oxide, zinc oxide, lead oxide etc.)); a filler and a reinforcing material (for example, carbon black, barium sulfate, calcium metasilicate, calcium carbonate, titanium dioxide, silicon dioxide, a fluorine-containing copolymer other than the fluorine-containing copolymers (A) and (B) (such as tetrafluoroethylene-fluoroalkyl vinyl ether copolymer, tetrafluoroethylene-hexafluoropropylene copolymer, or ethylene-tetrafluoroethylene copolymer), polytetrafluoroethylene (PTFE), an aromatic polyester, polyamide-imide, thermoplastic polyimide, clay, or talc); a scorch retarder (for example, a phenolic hydroxyl group-containing compound such as bisphenol A, a quinone such as hydroquinone, a α-methylstyrene dimer such as 2,4-di(3-isopropylphenyl)-4-methyl-1-pentene etc.); a crown ether (for example, 18-crown-6) and a release agent (for example, sodium stearate).

In the case where the present composition 1 contains additional components, the total contents of the additional components is preferably 0.1 to 30 parts by mass, more preferably 1 to 15 parts by mass, still more preferably 3 to 5 parts by mass, per 100 parts by mass of the fluorine-containing copolymer (A).

The present composition 1 preferably has a T₉₀ value of 10 minutes or less in a vulcanization test at 180°C according to JIS K6296. The lower limit of the T₉₀ value is preferably 1 minute or more.

As a method for measuring the T₉₀ value, for example, the method described in the Examples below may be used.

As a method for producing the present composition 1, a method may be mentioned in which the above-described components are mixed. The mixing of the above-described components can be conducted using a rubber mixing machine such as a roll mill, a kneader, a Banbury mixer, an extruder or the like.

After obtaining the mixture of the above-described components, the mixture may be shaped as desired.

Specific examples of the method for shaping the mixture include compression molding, injection molding, extrusion molding, calender molding, and dissolving in a solvent followed by dipping or coating a substrate with the resulting solution.

### [Fluorine-Containing Copolymer Composition (Second Embodiment)]

A fluorine-containing copolymer composition of the second embodiment of the present invention (hereinafter also referred to as the "present composition 2") contains:
a fluorine-containing copolymer (A) including units based on tetrafluoroethylene and units based on perfluoro(alkyl vinyl ether);
a fluorine-containing copolymer (B), different from the fluorine-containing copolymer (A), including units based on a monomer having at least one functional group selected from the group consisting of a carboxy group and a group represented by the formula (X), units based on tetrafluoroethylene and units based on perfluoro(alkyl vinyl ether); and
a crosslinking agent,
wherein the fluorine-containing copolymer composition has a T₉₀ value of 10 minutes or less in a vulcanization test at 180°C according to JIS K6296.

The types and contents of the respective components and the physical properties of the present composition in the second embodiment are the same as those described in the first embodiment, and preferred embodiments thereof are also the same as those described above. Here, the particle size D90 of the fluorine-containing copolymer (B) in the second embodiment is not limited to be 4.0 µm or smaller, but is preferably 4.0 µm or smaller.

The reason for the predetermined effects of the present composition 2 is not clear. It is however considered that the time required for crosslinking of the present composition 2 is shortened to decrease the duration for which the present composition 2 is exposed to heat and achieve reduced thermal deterioration and improved heat resistance of the resulting crosslinked product, thereby achieving the predetermined effects.

### [Crosslinked Rubber Article]

A crosslinked rubber article of the present invention is a rubber article obtained by crosslinking the fluorine-containing copolymer (A) in the above-described present composition (herein, the "present composition 1" and the "present composition 2" are collectively referred to simply as the "present composition").

As a method for crosslinking the fluorine-containing copolymer (A) in the present composition, crosslinking by heating the present composition is preferable.

Specific examples of such crosslinking by heating include heat-press crosslinking, steam crosslinking, crosslinking by injection molding, hot-air crosslinking, molten salt crosslinking, crosslinking in a fluidized bed and Routh crosslinking.

The heating conditions are preferably 100 to 400°C for 1 second to 24 hours.

The crosslinked rubber obtained by heating (primary crosslinking) of the present composition may be further heated and thereby subjected to secondary crosslinking. By secondary crosslinking, the mechanical properties, compression set and other properties of the crosslinked rubber can be stabilized or improved.

The conditions for secondary crosslinking are preferably 80 to 350°C for 30 minutes to 48 hours.

The fluorine-containing copolymer (A) may be crosslinked by any method other than heating the present composition, such as applying radiation to the present crosslinkable composition. Specific examples of the radiation applied include an electron beam and an ultraviolet ray.

### <Applications>

The crosslinked rubber article is suitable as materials for O-rings, sheets, gaskets, oil seals, diaphragms, V-rings and the like. The crosslinked rubber article can also be used for various applications such as heat-resistant chemical-resistant sealing materials, heat-resistant oil-resistant sealing materials, wire sheath materials, sealing materials for semiconductor manufacturing equipment, sealing materials for liquid crystal display panel manufacturing equipment, sealing materials for light emitting diode manufacturing equipment, corrosion-resistant rubber paints, sealing materials for urea-resistant grease etc., rubber paints, adhesive rubber, hoses, tubes, calendered sheets (rolls), sponges, rubber rolls, oil drilling members, heat dissipation sheets, solution-crosslinked materials, rubber sponges, bearing seals (urea resistant grease etc.), linings (resistant to chemical), insulating sheets for vehicles, insulating sheets for electronic equipment, rubber bands for watches, endoscope packings (resistant to amine), bellows hoses (produced from calendered sheets), packings/valves for water heaters, fenders (for marine civil engineering and ships), fibers and non-woven fabrics (protective clothing etc.), sealing materials for substrates, rubber gloves, stators of single-screw eccentric pumps, parts for urea SCR systems, vibration isolators, damping materials, sealants, additives to other materials, and toys.

### EXAMPLES

The present invention will now be described in further detail with reference to Examples. Here, Ex. 1 corresponds to Example of the present invention; and Ex. 2 to Ex. 4 correspond to Comparative Example. It should however be understood that the present invention is by no means restricted to these Examples.

### [Composition Analysis of Fluorine-Containing Copolymers]

The contents (mol%) of the respective units in the fluorine-containing copolymer (A-1) described below were determined by ¹⁹F-nuclear magnetic resonance (NMR) analysis.

The contents (mol%) of the respective units in the fluorine-containing copolymers (B-1) and (C-1) to (B-3) described below were determined by melt NMR analysis and fluorine content analysis. However, the contents of NAH units were determined by the following infrared absorption spectrum analysis.

### [Infrared Absorption Spectrum Analysis]

Each of the fluorine-containing copolymers (B-1) and (C-1) to (C-3) described below was press-formed into a film with a thickness of 200 µm. An infrared absorption spectrum of the film was measured, in which an absorption peak corresponding to NAH units in each of the fluorine-containing copolymers (B-1) and (C-1) to (C-3) appeared at 1778 cm⁻¹. The absorbance at the absorption peak was measured, and using the NAH molar absorptivity of 20810 mol⁻¹·l·cm⁻¹, the content of NAE units in each of the fluorine-containing copolymer (B-1) and (C-1) to (C-3) was determined from the measured absorbance.

### [Particle Size D90]

Each of the fluorine-containing copolymers (B-1) and (C-1) to (C-3) described below was dispersed in isopropyl alcohol to prepare a dispersion (solid concentration: 0.5 mass%). The particle size D90 of the fluorine-containing copolymer (B-1) or the like in the dispersion was measured using a laser diffraction/scattering particle size distribution analyzer (LMS-2000e, manufactured by SEISHIN ENTERPRISE Co., Ltd.).

### [Bulk Density]

The bulk density of the fluorine-containing copolymer (B-1) or the like was measured using a A.B.D. powder characteristics tester (ABD-100 model) manufactured by Tsutsui Scientific Instruments, with sample containers having a capacity of 100 mL.

For example, the fluorine-containing copolymer (B-1) was fed into the sample container such that the sample container was filled within 30 to 60 seconds. Any fluorine-containing copolymer (B-1) piling up above the top of the sample container was leveled off with a spatula, and any fluorine-containing copolymer (B-1) adhering to the outside of the sample container was brushed off. The mass of the sample container 1 filled with the fluorine-containing copolymer (B-1) was measured using an electronic balance. The mass of the empty sample container 2 was also measured. The density (g/mL) was calculated from the difference between the measured mass of the sample container 1. The calculated value was taken as the bulk density (g/mL).

### [T₉₀ Value]

Each of the fluorine-containing copolymer compositions described below was formed into a sheet with a thickness of 3 mm. The resulting sheet was cut into a piece weighting 10 g. The cut piece was sandwiched between two polyester films (manufactured by ALFA Technologies, PART#F0311-S, 130 mm × 130 mm × 24 µm) from both main surface sides, thereby obtaining a measurement sample. The measurement sample was placed on a die. Using a measurement device PREMIER RPA (manufactured by ALFA Technologies, die shape: D0380), the torque (dNm) exerted on the measurement sample was measured at 180°C for 20 minutes under the conditions of a frequency of 100 cpm and an angle of 3.00 deg. Assuming the minimum and maximum values of the measured torque curve as 0% and 100%, respectively, the processing time required for the torque to reach 90% was determined as the T₉₀ value.

### [Plasma Test]

An O-ring formed in each Ex. described below was cut at three points along the thickness direction such that the circumference was divided into three equal parts, thereby obtaining measurement samples. Using a plasma etcher (CPE-200AHM, manufactured by SAKIGAKE Semiconductor Co., Ltd.), the measurement samples were subjected to plasma processing under the conditions of a gas species of N₂/NF₃ (NF₃ mixing ratio: 20%), a power of 300 W and a pressure of 26 Pa. The samples were respectively taken out after 1.5 hours, 3 hours and 6 hours of plasma processing. The masses of the respective samples were measured (to the first decimal place) using an Azpro electronic balance (model: BCA64I-1SJP, manufactured by Sartorius).

Here, the plasma treatment time was divided into three periods: period A from 0 to 1.5 hours, period B for 1.5 to 3.0 hours and period C from 3.0 to 6.0 hours. The weight loss rate (mass%/time (h)) of the sample per unit time during each period of plasma processing, relative to the mass of the sample before plasma processing, was determined.

For example, when the mass of the sample before plasma processing was 10.0 g; the mass of the sample after 1.5 hours of plasma processing was 8.0 g; and the mass of the sample after 3.0 hours of plasma processing was 5.0 g, the weight loss rate of the sample per unit time during the period A, relative to the mass of the sample before plasma processing, was calculated as follows: [100 × (10.0 - 8.0) / 10.0] / (1.5) = 13.33 (mass%/h). Further, the weight loss rate of the sample per unit time during the period A + B, relative to the mass of the sample before plasma processing, was calculated as follows: [100 × (10.0 - 5.0) / 10.0] / (3.0) = 16.67 (mass%/h)., and thus, the weight loss rate of the sample per unit time during the period B was calculated as follows: 16.67 - 13.33 = 3.34 (mass%/h).

### [Preparation of Fluorine-Containing Copolymer (A-1)]

A stainless steel pressure-resistant reactor equipped with an anchor stirrer and having an internal volume of 20 L was deaerated. Into this reactor, 7.2 L of ultrapure water, 880 g of a 30 mass% solution of C₂F₅OCF₂CF₂OCF₂COONH₄ as an emulsifier, 7.3 g of 8CNVE and 15.9 g of a 5 mass% aqueous solution of disodium hydrogenphosphate·dodecahydrate were charged, followed by replacing the gas phase with nitrogen. While stirring with the anchor stirrer at a rate of 375 rpm, 137 g of TFE and 635 g of PMVE were added into the reactor, and then, the temperature inside the reactor was increased to 80°C. The pressure inside the reactor was 0.90 MPa [gauge]. The polymerization was initiated with the addition of 28 mL of a 3 mass% aqueous solution of ammonium persulfate (APS). The molar ratio of the monomers added before the initiation of the polymerization (hereinafter also referred to as "initial monomers") was TFE: PMVE: 8CNVE = 26.3: 73.3: 0.4.

After the initiation of the polymerization, the monomers were added as follows with the progress of the polymerization. Hereinafter, the addition of the monomers after the initiation of the polymerization is also referred to as "subsequent addition"; and the monomers added after the initiation of the polymerization are also referred to as "subsequent monomers".

When the pressure inside the reactor decreased to 0.89 MPa [gauge], TFE was added to increase the pressure inside the reactor to 0.90 MPa [gauge]. This operation was repeated, and upon every addition of 119.3 g of TFE, 3.7 g of 8CNVE, 74 g of PMVE and 3.7 g of 8CNVE were added in this order.

When the polymerization rate began to decrease, a 3 mass% aqueous solution of APS was added as appropriate. The total amount of the 3 mass% aqueous APS solution added after the initiation of the polymerization was 35 mL.

After the cycle in which the total mass of TFE added reached 1073.7 g, 119.3 g of TFE was added. When the total mass of TFE subsequently added reached 1193 g, the addition of the subsequent monomers was stopped. The inside of the reactor was cooled to 10°C to terminate the polymerization reaction. With this, a latex containing a fluorine-containing copolymer was obtained. The polymerization time was 375 minutes. The total mass of the subsequent monomers added was 1193 g of TFE, 666 g of PMVE and 66.6 g of 8CNVE, corresponding to a molar ratio of TFE: PMVE: 8CNVE = 74.0: 25.0: 1.0.

The latex was added to a 5 mass% aqueous solution of aluminum potassium sulfate to cause aggregation and precipitation of the fluorine-containing copolymer. The fluorine-containing copolymer was filtered out, washed with ultrapure water and vacuum-dried at 50°C, thereby obtaining a white fluorine-containing copolymer (A-1). The contents (molar ratio) of the respective units in the fluorine-containing copolymer (A-1) was TFE units: PMVE units: 8CNVE units = 70.9: 28.6: 0.5.

### [Fluorine-Containing Copolymer (B-1)]

A "fluorine-containing copolymer (X1-1)" disclosed in Example of WO 2016/017801 was subjected to primary grinding using a rotor mill (variable-speed rotor mill P-14, manufactured by Fritsch GmbH), followed by secondary grinding using a jet mill (single track jet mill FS-4, manufactured by SEISHIN ENTERPRISE Co., Ltd.) under a grinding pressure of 0.6 MPa, to prepare a resin powder. Using a high-efficiency precision air classifier (Cruseal N-10, manufactured by SEISHIN ENTERPRISE Co., Ltd.), the obtained resin powder was classified at a processing rate of 0.4 kg/hr, thereby obtaining a fluorine-containing copolymer (B-1). The fluorine-containing copolymer (B-1) had a particle size D90 of 3.0 µm.

The molar ratio of the respective units in the fluorine-containing copolymer (B-1) was NAH units: TFE units: PPVE units = 0.1: 97.9: 2.0.

### [Fluorine-Containing Copolymer (C-1)]

A "fluorine-containing copolymer (X1-1)" disclosed in Example of WO 2016/017801 was ground using a jet mill, and used as a fluorine-containing copolymer (C-1). The fluorine-containing copolymer (C-1) had a particle size D90 of 5.0 µm and a particle size D50 of 2 to 3 µm.

The molar ratio of the respective units in the fluorine-containing copolymer (C-1) was NAH units: TFE units: PPVE units = 0.1: 97.9: 2.0.

### [Fluorine-Containing Copolymer (C-2)]

A "fluorine-containing copolymer (X1-1)" disclosed in Example of WO 2016/017801 was ground using a rotor mill, and used as a fluorine-containing copolymer (C-2). The fluorine-containing copolymer (C-2) had a particle size D90 of 100 µm.

The molar ratio of the respective units in the fluorine-containing copolymer (C-2) was NAH units: TFE units: PPVE units = 0.1: 97.9: 2.0.

### [Fluorine-Containing Copolymer (C-3)]

A "fluorine-containing copolymer (X1-1)" disclosed in Example of WO 2016/017801 was ground using a jet mill under a grinding pressure of 0.55 MPa, and used as a fluorine-containing copolymer (C-3). The fluorine-containing copolymer (C-3) had a particle size D90 of 4.5 µm and a particle size D50 of 1.7 µm.

The molar ratio of the respective units in the fluorine-containing copolymer (C-3) was NAH units: TFE units: PPVE units = 0.1: 97.9: 2.0.

### [Ex. 1]

The components listed in Table 1 were mixed in the amounts specified therein, and the resulting mixture was kneaded at room temperature for 10 minutes using a two-roll mill to obtain a fluorine-containing copolymer composition.

The obtained fluorine-containing copolymer composition was hot-pressed (primary crosslinking) under the press conditions of 180°C and 20 minutes using a hydraulic press (model: SA-301, 50T type, manufactured by TESTER SANGYO CO., LTD., ram diameter: 180 mm) to form an O-ring (size: P-26).

In a nitrogen atmosphere, the O-ring was heated at 90°C for 2 hours, then gradually raised to 200°C over 2 hours and maintained at that temperature for 4 hours. Subsequently, the temperature was further increased to 305°C over 2 hours, and the O-ring was heated at 305°C for 13 hours (secondary crosslinking). The O-ring was then cooled to room temperature and used as an O-ring of Ex. 1.

### [Ex. 2 to Ex. 4]

O-rings of Ex. 2 to Ex. 4 were obtained in the same manner as in Ex. 1, except that the fluorine-containing copolymers shown in the table below were used.

BOAP: 2,2-bis(3-amino-4-hydroxyphenyl)hexafluoropropane, polyamine compound (crosslinking agent)

**[Table 1]**

| | Fluorine-Containing Copolymer | | | |
|---|---|---|---|---|
| | (B-1) | (C-1) | (C-2) | (C-3) |
| Particle Size D90 (µm) | 3.0 | 5.0 | 100.0 | 4.5 |
| Bulk Density (g/mL) | 0.20 | 0.27 | 0.59 | 0.26 |

**[Table 2]**

| | | | Ex. 1 | Ex. 2 | Ex. 3 | Ex. 4 |
|---|---|---|---|---|---|---|
| Fluorine-Containing Copolymer | (A-1) | | 100 | 100 | 100 | 100 |
| | (B-1) | | 20 | - | - | - |
| | (C-1) | | - | 20 | - | - |
| | (C-2) | | - | - | 20 | - |
| | (C-3) | | - | - | - | 20 |
| Crosslinking Agent | BOAP | | 0.8 | 0.8 | 0.8 | 0.8 |
| T₉₀ (min) | | | 10 | 11 | 13 | 11 |
| Plasma Test (Weight Loss Rate) | Period A | 0 to 1.5 hr (mass%/h) | 2.125 | 2.124 | 2.161 | 2.124 |
| | Period B | 1.5 to 3.0 hr (mass%/h) | 2.119 | 2.115 | 2.160 | 2.116 |
| | Period C | 3.0 to 6.0 hr (mass%/h) | 2.036 | 2.045 | 2.085 | 2.050 |

As shown in the tables above, it has been confirmed that the effects of the present invention can be achieved through the use of the present composition.

As can be specifically seen from comparison between Ex. 1 and Ex. 2, the weight loss rate of Ex. 1 in the periods A and B was comparable to that of Ex. 2, whereas the weight loss rate of Ex. 1 in the period C was lower than that of Ex. 2. In other words, the crosslinked rubber article of this Example showed a reduced weight loss rate in the period C after a predetermined time lapse during long-term use under plasma irradiation conditions, as compared to Ex. 2 of the prior art. It has thus been confirmed that the present invention exhibits advantageous effects over the prior art. These effects of the present invention are not readily predictable by those skilled in the art.

Further, as can be seen from comparison between Ex. 1 and Ex. 3, the weight loss rate of Ex. 1 was lower in each of the periods A to C than that of Ex. 3.

As can be seen from comparison of Ex. 1 and Ex. 4, the weight loss rate of Ex. 1 in the periods A and B was comparable to that of Ex. 4, whereas the weight loss rate of Ex. 1 in the period C was lower than that of Ex. 4.

The entire disclosure of Japanese Patent Application No. 2023-221261 filed on December 27, 2023, including specification, claims and summary, is incorporated herein by reference in its entirety.

## Claims

1. A fluorine-containing copolymer composition comprising:
a fluorine-containing copolymer (A) comprising units based on tetrafluoroethylene and units based on perfluoro(alkyl vinyl ether);
a fluorine-containing copolymer (B), which is a fluorine-containing copolymer different from the fluorine-containing copolymer (A), comprising units based on a monomer having at least one functional group selected from the group consisting of a carboxy group and a group represented by the formula (X), and having a particle size D90 of 4.0 µm or smaller,
*-CO-O-CO-* (X)
where * represents a bonding position; and
a crosslinking agent.

2. The fluorine-containing copolymer composition according to Claim 1,
wherein the fluorine-containing copolymer (A) further comprises units having nitrile groups,
wherein the content of the units having nitrile groups to all units in the fluorine-containing copolymer (A) is 0.05 to 5.0 mol%,
wherein the content of the units based on tetrafluoroethylene to all units in the fluorine-containing copolymer (A) is 59.0 to 79.95 mol%, and
wherein the content of the units based on perfluoro(alkyl vinyl ether) to all units in the fluorine-containing copolymer (A) is 20.0 to 40.95 mol%.

3. The fluorine-containing copolymer composition according to Claim 1 or 2,
wherein the content of the units based on the monomer having at least one functional group selected from the group consisting of a carboxy group and a group represented by the formula (X) to all units in the fluorine-containing copolymer (B) is 0.01 to 3.0 mol%,
wherein the content of the units based on tetrafluoroethylene to all units in the fluorine-containing copolymer (B) is 90 to 99.89 mol%, and
wherein the content of the units based on perfluoro(alkyl vinyl ether) to all units in the fluorine-containing copolymer (B) is 0.1 to 9.99 mol%.

4. The fluorine-containing copolymer composition according to Claim 1 or 2, wherein the content of the fluorine-containing copolymer (B) is 50 parts by mass or less per 100 parts by mass of the fluorine-containing copolymer (A).

5. The fluorine-containing copolymer composition according to Claim 1 or 2,
wherein the crosslinking agent is a compound having two or more amino groups, and
wherein the content of the crosslinking agent is 0.3 to 10 parts by mass per 100 parts by mass of the fluorine-containing copolymer (A).

6. The fluorine-containing copolymer composition according to Claim 1 or 2, wherein the fluorine-containing copolymer (B) has a bulk density of 0.25 g/mL or lower.

7. A fluorine-containing copolymer composition comprising:
a fluorine-containing copolymer (A) comprising units based on tetrafluoroethylene and units based on perfluoro(alkyl vinyl ether);
a fluorine-containing copolymer (B), which is a fluorine-containing copolymer different from the fluorine-containing copolymer (A), comprising units based on a monomer having at least one functional group selected from the group consisting of a carboxy group and a group represented by the formula (X), units based on tetrafluoroethylene and units based on perfluoro(alkyl vinyl ether)
*-CO-O-CO-* (X)
where * represents a bonding position; and
a crosslinking agent,
wherein the fluorine-containing copolymer composition has a T₉₀ value of 10 minutes or less in a vulcanization test at 180°C according to JIS K6296.

8. The fluorine-containing copolymer composition according to Claim 7,
wherein the fluorine-containing copolymer (A) further comprises units having nitrile groups,
wherein the content of the units having nitrile groups to all units in the fluorine-containing copolymer (A) is 0.05 to 5.0 mol%,
wherein the content of the units based on tetrafluoroethylene to all units in the fluorine-containing copolymer (A) is 59.0 to 79.95 mol%, and
wherein the content of the units based on perfluoro(alkyl vinyl ether) to all units in the fluorine-containing copolymer (A) is 20.0 to 40.95 mol%.

9. The fluorine-containing copolymer composition according to Claim 7 or 8,
wherein the content of the units based on the monomer having at least one functional group selected from the group consisting of a carboxy group and a group represented by the formula (X) to all units in the fluorine-containing copolymer (B) is 0.01 to 3.0 mol%,
wherein the content of the units based on tetrafluoroethylene to all units in the fluorine-containing copolymer (B) is 90 to 99.89 mol%, and
wherein the content of the units based on perfluoro(alkyl vinyl ether) to all units in the fluorine-containing copolymer (B) is 0.1 to 9.99 mol%.

10. The fluorine-containing copolymer composition according to Claim 7 or 8, wherein the content of the fluorine-containing copolymer (B) is 50 parts by mass or less per 100 parts by mass of the fluorine-containing copolymer (A).

11. The fluorine-containing copolymer composition according to Claim 7 or 8,
wherein the crosslinking agent is a compound having two or more amino groups, and
wherein the content of the crosslinking agent is 0.3 to 10 parts by mass per 100 parts by mass of the fluorine-containing copolymer (A).

12. The fluorine-containing copolymer composition according to Claim 7 or 8, wherein the fluorine-containing copolymer (B) has a bulk density of 0.25 g/mL or lower.

13. A crosslinked rubber article obtained from the fluorine-containing copolymer composition according to Claim 1 or 7.
